Europäisches Patentamt

European Patent Office

Office européen des brevets

(11) Publication number: **0 297 462 B1**

# EUROPEAN PATENT SPECIFICATION

(45) Date of publication of patent specification: **20.05.92**　(51) Int. Cl.5: **G01N 21/89**, G01N 21/47, G01N 33/00

(21) Application number: **88110134.9**

(22) Date of filing: **24.06.88**

(54) Tape defect detecting system.

(30) Priority: **01.07.87 JP 164689/87**
**08.06.88 JP 140812/88**

(43) Date of publication of application:
**04.01.89 Bulletin  89/01**

(45) Publication of the grant of the patent:
**20.05.92 Bulletin  92/21**

(84) Designated Contracting States:
**DE GB NL**

(56) References cited:
**BE-A- 648 025**
**GB-A- 2 020 415**
**US-A- 3 255 356**
**US-A- 3 697 758**
**US-A- 4 038 554**

**IBM TECHNICAL DISCLOSURE BULLETIN vol.
28, no. 10, March 1986, pages 4235-4237;
"Optical device for online assessment of
magnetic tape surface quality"**

(73) Proprietor: **FUJI PHOTO FILM CO., LTD.**
**210 Nakanuma Minamiashigara-shi**
**Kanagawa-ken, 250-01(JP)**

(72) Inventor: **Sakaguchi, Masaaki c/o Fuji Photo
Film Co., ltd**
**2-12-1, Oogi-cho Odawara-shi**
**Kanagawa-Ken(JP)**
Inventor: **Kubota, Kayuo c/o Fuji Photo Film
Co., ltd**
**2-12-1, Oogi-cho Odawara-shi**
**Kanagawa-Ken(JP)**

(74) Representative: **Patentanwälte Grünecker,
Kinkeldey, Stockmair & Partner
Maximilianstrasse 58
W-8000 München 22(DE)**

## Description

## BACKGROUND OF THE INVENTION

Field of the Invention

This invention relates to a tape defect detecting system in accordance with the generic clause of Claim 1.

Such a tape defect detecting system is known from GB-2 020 415 A.

As a system for detecting a surface defect on a tape such as a magnetic tape, e.g., scratch, deformation and foreign particles adhering to the tape surface, there has also been known a system in which a light beam is caused to scan the tape surface as a flying spot, reflected part of the light beam from the tape surface is received and a surface defect of the tape is detected on the basis of the quantity of the light received. There has been a problem in the conventional system that a part of the scanning light beam passes by through the tape and reflected by a material behind the tape, e.g., the inner wall surface of the casing in the case that the tape is accommodated in a magnetic tape cassette, and the reflected light becomes stray light and impinges upon the photodetector as noise which lowers the S/N ratio of the detecting signal, thereby adversely affecting the defect detection. Another part of the scanning light beam passes through or is transmitted through the tape and is also reflected by a material behind the tape and becomes stray light.

In view of this prior art, it is the object of the present invention to provide a tape defect detecting system which can effect defect detection with high accuracy without being affected by stray light formed by the part of the scanning light beam passing by and/or through the tape.

This object is solved by a tape detecting system having the features of Claim 1. Preferred embodiments are disclosed in the dependent claims.

In accordance with the present invention, a light scattering/absorbing means is disposed behind the tape, i.e., on the side of the tape opposite to the side from which the scanning light beam is projected onto the tape surface, so that the part of the scanning light beam passing by and/or through the tape impinges upon the light scattering/absorbing means and is scattered and absorbed not to impinge upon the photodetector.

The light scattering/absorbing means is an optical element provided with a light scattering/absorbing surface having at least one of light scattering effect and light absorbing effect. For example, the light scattering/absorbing means may be a metal or plastic member having a flat surface the roughness of which is about 1S. Preferably the light scattering/absorbing means has a concave light scattering/absorbing surface, and more preferably the light scattering/absorbing means is a cylindrical member having a slit through which light enters the cylindrical member.

## BRIEF DESCRIPTION OF THE DRAWINGS

Figure 1 is a schematic view showing a tape defect detecting system in accordance with an embodiment of the present invention,

Figure 2 is an enlarged perspective view of a back pin employed in the tape defect detecting system of Figure 1, and

Figures 3 and 4 are views respectively showing light scattering/absorbing means which can be employed instead of the back pin shown in Figure 2.

## DESCRIPTION OF THE PREFERRED EMBODIMENT

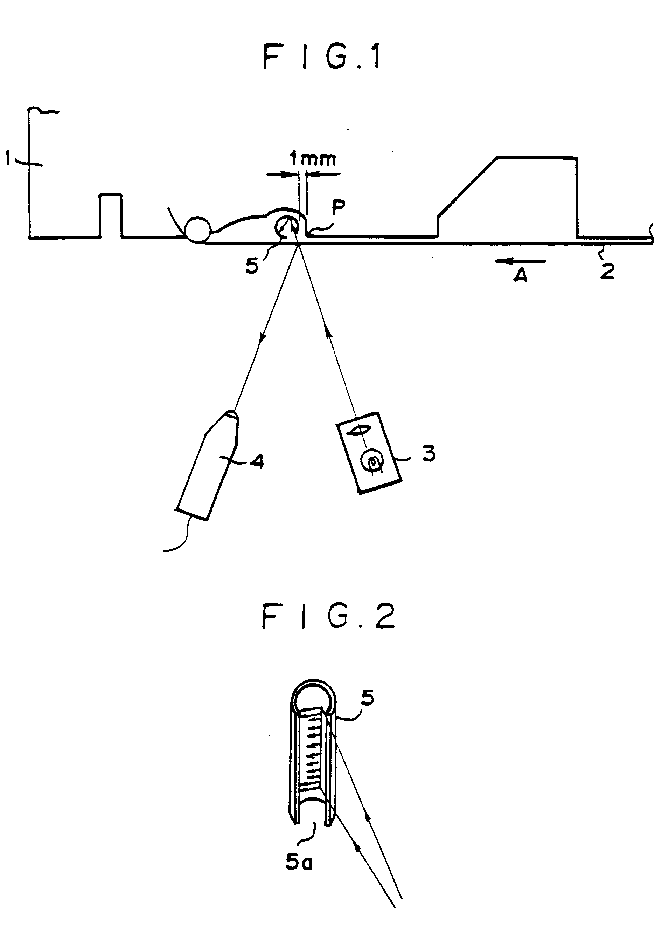

In Figure 1, a tape defect detecting system in accordance with an embodiment of the present invention comprises a light projecting means 3 which projects a light beam onto a surface of a magnetic tape 2 in a cassette half 1 while the tape runs in the direction of arrow A at about 150mm/sec, a light receiving means 4 which receives light reflected from the surface of the magnetic tape 2, and a cylindrical back pin 5. The back pin 5 is positioned to extend in the direction of the width of the tape 2 and is provided with a slit 5a (Figure 2) extending in the longitudinal direction thereof. The back pin 5 is positioned with respect to the light projecting means 3 so that a part of the projected light beam passing by and/or through the tape 2 enters the back pin 5 through the slit 5a. The light beam is deflected to scan the tape surface in the direction of the width thereof at a predetermined period (e.g., 500Hz) while the tape 2 runs at a predetermined speed in the direction of the arrow A, whereby the light beam is caused to raster-scan the tape surface.

The light projecting means 3 includes a He-Ne laser source the power of which is 1mw, and is adapted to emit a light beam having a diameter of 0.4mm. The light beam emitted from the laser source is deflected by an oscillating mirror (not shown) to scan the tape surface over the entire width of the tape (12.7mm). The line width is set to be l5mm. As the light receiving means 4, a diffusion type photomultiplier tube can be employed.

The back pin 5 may be formed of any suitable material. When the back pin 5 is formed of metal, the metal is preferably a metal that can form a surface insensitive to light.

When surface defect is detected by the system of this embodiment, the guard panel of the cassette half 1 is opened and the tape 2 is run at the predetermined speed in the direction of the arrow A. Then, a light beam is projected onto the tape surface at a predetermined incident angle (e.g., 22.5°) from the light projecting means 3 and is caused to scan the tape surface in the direction of width of the tape 2 at the predetermined speed. A part of the light projected onto the tape surface is reflected and the reflected light from the tape surface is received by the light receiving means 4. The light receiving means 4 coverts the received reflected light into an electric signal and determines whether a defect exists on the surface of the tape 2 on the basis of the level of the electric signal. That is, the light receiving means 4 comprises a photoelectric convertor section and a determining section which measures the level of the electric signal and determines whether a defect exists on the tape surface. These sections may be accommodated in separate housings.

A part of the light projected onto the tape surface passes by and/or through the tape, and such a part of the light is caused to enter the back pin 5 through the slit 5a. The back pin 5 may be positioned at a distance of 1mm or so from a corner portion of the cassette half 1 indicated at P in Figure 1. The light entering the back pin 5 is reflected by the inner wall surface of the back pin 5 a plurality of times, and scattered and absorbed by the inner wall surface of the back pin 5 while it is repeatedly reflected. Therefore, the light passing by and/or through the tape cannot impinge upon the light receiving means 4 as stray light like in the conventional system. The slit 5a is formed by cutting the wall of the cylindrical back pin 5 over 90° throughout the length of the back pin 5 as shown in Figure 2. The back pin 5 is 5mm in diameter and the slit 5a is 3mm in width in this particular embodiment. The back pin 5 is positioned so that the whole light passing by and/or through the tape due to the scanning light beam enters the back pin 5. The length of the back pin 5 is larger than the width of the tape 2 and the scanning line width, and accordingly, also the part of the projected light which fails to impinge upon the tape surface enters the back pin 5.

Further, by providing the back pin 5 with a black matte inner surface, the light entering the back pin 5 can be more effectively prevented from escaping from the back pin 5. Thus, in the tape defect detecting system of this embodiment, the quantity of stray light received by the light receiving means 4 is minimized, whereby the S/N ratio of the signal from the light receiving means 4 can be substantially improved. For example, the S/N ratios for several surface defects were in the range of 2 to 3 (an anti-logarithm) in the case where the back pin 5 was not provided, whereas in the range of 5 to 6 in the case where the back pin 5 was provided.

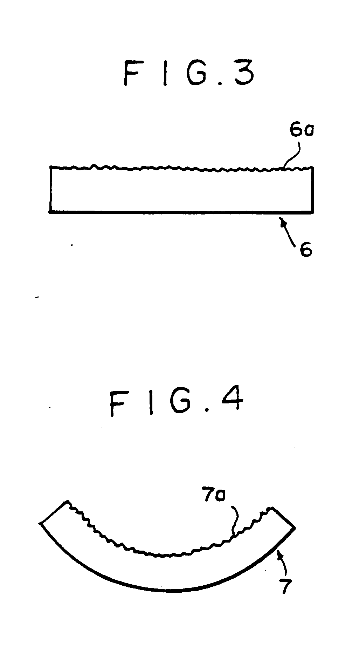

Though, in the embodiment described above, the back pin 5 is employed as the light scattering/absorbing means, a light scatteri.ng plate 6 having a flat light scattering surface 6a as shown in Figure 3 or a light scattering plate 7 having a concave light scattering surface 7a as shown in Figure 4 may be employed instead of the back pin 5. For example, the light scattering surfaces 6a and 7a have a surface roughness of about 1S. The light impinging upon the light scattering surface 6a or 7a is scattered in all directions and accordingly, the component traveling toward the light receiving means 4 is minimized. The light scattering surface may be formed of a light absorbing material.

## Claims

1. A tape defect detecting system comprising a light beam projecting means (3) for projecting a light beam onto a surface of a tape (2), and a light receiving means (4) which receives a reflected part of said light beam from said surface of said tape (2) and detects whether any surface defect exists on said surface of said tape (2) on the basis of the quantity of the received light

   **characterized by**

   a light scattering/absorbing means (5,6,7) which scatters and absorbs the incident light in such a way that said light does not impinge upon said light receiving means (4) and which is disposed on the side of said tape (2) opposite to said surface on which said light beam is projected so that at least a part of said light beam passing by and/or through said tape (2) impinges upon said light scattering/absorbing means (5,6,7).

2. The tape defect detecting system of Claim 1 **characterized in that** said light scattering/absorbing means (6) comprises a flat light scattering/absorbing surface (6a).

3. The tape defect detecting system of Claim 1 **characterized in that** said light scattering/absorbing means (7) comprises a concave light scattering/absorbing surface (7a).

4. The tape defect detecting system of Claim 1 **characterized in that** said light scattering/absorbing means comprises a cylindrical member (5) having a slit (5a) extending in the longitudinal direction thereof, said cylindrical member (5) being disposed so that at least a part of said light beam passing by and/or through said tape (2) enters therein through said slit (5a) and is reflected by a plurality of times by the inner wall surface thereof.

**Revendications**

1. Système de détection de défauts de bande, comprenant un moyen (3) de projection de faisceau lumineux servant à projeter un faisceau lumineux sur la surface d'une bande (2), et un moyen de réception de lumière (4) qui reçoit une partie réfléchie dudit faisceau lumineux en provenance de ladite surface de ladite bande (2) et détecte, en fonction de la quantité de lumière reçue, s'il existe ou non un défaut de surface sur ladite surface de ladite bande (2),
caractérisé par :
un moyen de diffusion/absorption de lumière (5,6,7) qui diffuse et absorbe la lumière incidente de telle manière que ladite lumière ne frappe pas ledit moyen de réception de lumière (4) et qui est disposé sur le côté de ladite bande (2) opposé à ladite surface sur laquelle ledit faisceau lumineux est projeté, si bien qu'au moins une partie dudit faisceau lumineux passant près et, ou bien, au travers de ladite bande (2) frappe sur ledit moyen de diffusion/absorption de lumière (5,6,7).

2. Système de détection de défauts de bande selon la revendication 1, caractérisé en ce que ledite moyen de diffusion/absorption de lumière (6) comprend une surface plane de diffusion/absorption de lumière (6a).

3. Système de détection de défauts de bande selon la revendication 1, caractérisé en ce que ledit moyen de diffusion/absorption de lumière (7) comprend une surface concave de diffusion/absorption de lumière (7a).

4. Système de détection de défauts de bande selon la revendication 1, caractérisé en ce que ledit moyen de diffusion/absorption de lumière comprend un élément cylindrique (5) possédant une fente (5a) qui s'étend suivant sa direction longitudinale, ledit élément cylindrique (5) étant disposé de façon qu'au moins une partie dudit faisceau lumineux passant près et, ou bien, au travers de ladite bande (2) y entre par ladite fente (5a) et soit réfléchie plusieurs fois par la surface de sa paroi interne.

**Patentansprüche**

1. System zur Detektion der Fehler eines Bandes mit einer Lichtstrahlprojektionsvorrichtung (3) zum Projizieren eines Lichtstrahls auf eine Oberfläche eines Bandes (2), und mit einer Lichtempfangseinrichtung (4), die einen reflektierten Teil des Lichtstrahls von der Oberfläche des Bandes (2) empfängt und auf der Basis der Menge des empfangenen Lichtes detektiert, ob ein Oberflächenfehler auf der Oberfläche des Bandes (2) vorliegt **gekennzeichnet durch** eine Lichtstreu/Absorptionseinrichtung (5,6,7), die das einfallende Licht auf eine solche Weise streut und absorbiert, daß das Licht nicht auf die Lichtempfangseinrichtung (4) fällt und die auf der Seite des Bandes (2) angeordnet ist, welche der Oberfläche, auf die der Lichtstrahl projiziert wird, gegenüberliegt, so daß mindestens ein Teil des Lichtstrahls, der an dem Band (2) vorbei- und/oder hindurchgeht, auf die Lichtstreu/Absorptionseinrichtung (5,6,7) auftrifft.

2. Das System zur Detektion der Fehler eines Bandes nach Anspruch 1 **dadurch gekennzeichnet,** daß die Lichtstreu/Absorptionseinrichtung (6) eine ebene Lichtstreu/Absorptionsoberfläche (6a) umfaßt.

3. Das System zur Detektion der Fehler eines Bandes nach Anspruch 1 **dadurch gekennzeichnet,** daß die Lichtstreu/Absorptionseinrichtung (7) eine konkave Lichtstreu/Absorptionsoberfläche (7a) umfaßt.

4. Das System zur Detektion der Fehler eines Bandes nach Anspruch 1 **dadurch gekennzeichnet,** daß die Lichtstreu/Absorptionseinrichtung ein zylindrisches Element (5) umfaßt, das einen Spalt (5a) aufweist, der sich entlang ihrer longitudinalen Richtung erstreckt, wobei das zylindrische Element (5) so angeordnet ist, daß zumindest ein Teil des Lichtstrahles, der an dem Band (2) vorbei- oder durchgeht, in dieses durch den Spalt (5a) eintritt und viele Male an dessen innerer Wandfläche reflektiert wird.

# F I G. 1

# F I G. 2

# F I G . 3

6a

6

# F I G . 4

7a

7